# EUROPÄISCHE PATENTSCHRIFT

(11) **EP 2 064 250 B1**
(45) Veröffentlichungstag und Bekanntmachung des Hinweises auf die Patenterteilung: **21.03.2012**
(21) Anmeldenummer: 07803304.0
(22) Anmeldetag: 06.09.2007
(51) Int. Cl.: C08F 6/00, C08F 6/22, C08F 297/04, C08C 1/14, C08L 55/00

(54) **VERFAHREN ZUR HERSTELLUNG VON POLYMERPULVERN**
METHOD FOR THE PRODUCTION OF POLYMER POWDERS
PROCÉDÉ DE PRODUCTION DE POUDRES DE POLYMÈRE

(30) Priorität: 20.09.2006 DE 102006044270
(43) Veröffentlichungstag der Anmeldung: 03.06.2009
(73) Patentinhaber: Ineos ABS (Jersey) Limited, Channel Islands (GB)
(72) Erfinder: DIETZ, Wolfgang, 47800 Krefeld (DE); JANSEN, Ulrich, 41541 Dormagen (DE)
(74) Vertreter: Smith, Julian Philip Howard
(86) Internationale Anmeldenummer: PCT/EP2007/059350
(87) Internationale Veröffentlichungsnummer: WO 2008/034724

(56) Entgegenhaltungen:
- EP-A- 1 752 830
- DE-A1- 4 015 296
- US-A- 2 396 907
- US-A- 3 751 527
- US-A- 4 591 632

## Beschreibung

Die Erfindung betrifft ein Verfahren zur Aufarbeitung einer Polymer-haltigen Latex-Dispersion, insbesondere einer Acrylnitril-Butadien-Styrol-Polymer-haltigen Latex-Dispersion, zu Polymerpulver bei dem durch Zusatz eines Koagulans, insbesondere einer Säure und/oder eines Elektrolyten, unter Durchmischung und/oder Scherung, beispielsweise in einer sogenannten Fäll- bzw. Kesselkaskade, der Latex unter Wärmeeinwirkung koaguliert wird und gegebenenfalls die flüchtigen Hilfsstoffe und restlichen Monomere durch Wasserdampfdestillation entfernt werden und die entstehende Suspension mechanisch und/oder thermisch zu feuchtem Polymer oder trockenem Polymerpulver verarbeitet wird.

Derartige Verfahren sind seit langem bekannt. Beispielsweise ist aus der DE 40 15 296 Al ein Verfahren zur kontinuierlichen Aufarbeitung von Vinylpolymerisatlatices zu thermoplastisch verarbeitbaren Vinylpolymerisatpulvern bekannt, bei dem ein Strom eines Vinylpolymerisatlatex durch Zufügen eines Stroms eines Koagulans unter intensiver Durchmischung und Scherung in einer Kesselkaskade bei einer mittleren Verweilzeit pro Kessel von 10 bis 60 Minuten bei Temperaturen von 50 bis 120°C koaguliert wird und wobei gegebenenfalls flüchtige Hilfsstoffe und restliche Monomere im Polymerisat durch Wasserdampfdestillation entfernt werden und ein Teil des vom Vinylpolymerisat abgetrennten Serums dem Strom des Koagulans zugefügt wird.

Aus der DE 2909518 Al ist ein Verfahren zum Entfernen von Restmonomeren aus durch Emulsionspolymerisation hergestellten ABS-Polymerisaten bekannt, bei dem man einem ABS-Polymerisat enthaltenden Latex 0,1 bis 10 Gew.%, bezogen auf Feststoff im Latex, einer Säure oder eines Elektrolyten (Salzes) zusetzt, das Gemisch gleichzeitig unter Entfernen von Restmonomeren und einem Teil des Wassers durch Destillation auf eine Temperatur von 55-120 Grad C erhitzt.

Die Patentschrift US 4 591 632 beschreibt ein Verfahren zur Aufarbeitung von Polymerpartikeln mittels Gefrieren einer Schicht Eis auf einem planaren Wärmeaustauscher. Der mit Eis beschichtete Wärmeaustauscher wird anschließend in einen Polymer enthaltenden Latex eingetaucht. Ein Teil des Polymers koaguliert und haftet an dem mit Eis beschichteten Wärmeaustauscher. Der mit Eis beschichtete Wärmeraustauscher wird aus dem Kontakt mit dem Latex herausgenommen, Wärme wird durch den Wärmeaustauscher durchgeleitet und das Polymer wiedergewonnen.

Die Patentschrift US 3 751 527 beschreibt die Verarbeitung von Polymeren, worin ein Latex koaguliert und ein wässriger Anteil vom Polymer enthaltenden Material getrennt wird. Der wässrige Anteil wird in einem Wärmeaustauschers gekühlt.

Die Patentschrift US 2 396 901 beschreibt ein Verfahren, worin ein warmer Latex mittels Durchlauf durch einen Wärmeaustauscher vorgekühlt wird, ,um die Wärme auf ein bereits erkaltetes Latex zu übertragen.

Die am 14 Februar 2007 veröffentliche Patentschrift EP 1 752 830 beschreibt ein Verfahren zur Herstellung von Tonerteilchen, worin die Tonerteilchen mittels eines Wärmeaustauschers, einer Kühlstreckenvorrichtung (In-Line-Kühlung) oder einer anderen Kühlvorrichtung abgekühlt werden.

Bei den bekannten Verfahren stellt sich das Problem, dass zur mechanischen und/oder thermischen Trocknung des im Allgemeinen sich in einer Suspension befindlichen, koagulierten Latex dessen Temperatur durch die Wärmeinwirkung und/oder die zuvor durchgeführte Destillation zu hoch ist, um unmittelbar danach die mechanische oder thermische Trocknung vornehmen zu können. Es ist daher bekannt, die Suspension durch Eintrag von entmineralisiertem Wasser (VE-Wasser) mit entsprechend niedriger Temperatur zu kühlen. Nachteilig dabei ist, dass die Kühlung mit dem zugeführten Wasser zusätzliche Kosten verursacht, nicht zuletzt weil das eingebrachte Wasser aufgrund des Kontakts mit der Suspension kontaminiert ist und aufwendig in einer Kläranlage aufbereitet werden muss. Zusätzlich ist die komplette Kühlwassermenge im nachgeschalteten Trocknungsschritt, beispielsweise in den vorgesehenen Zentrifugen, wieder zu entfernen ist. Dadurch verteuert sich die Herstellung des Pulvers und führt zu einem deutlichen Kapazitätsverlust in der nachgeschalteten Trocknungsapparatur (z. B. Zentrifuge).

Es ist daher Aufgabe der vorliegenden Erfindung, ein im Vergleich effizienteres Verfahren zur Gewinnung bzw. Aufarbeitung einer Polymer-haltigen Latex-Dispersion, insbesondere einer Acrylnitril-Butadien-Styrol-Polymer-haftigen Latex-Dispersion, zu Polymerpulverbereitzustellen.

Vorteilhafte Ausgestaltungen sind jeweils Gegenstand der Unteransprüche.

Die Erfindung betrifft ein Verfahren zur Aufarbeitung eines Polymer-haltigen Latex zu Polymerpulver bei dem durch Zusatz eines Koagulans, insbesondere einer Säure und/oder eines Elektrolyten, unter Durchmischung und/oder Scherung der Latex unter Wärmeeinwirkung koaguliert wird, gegebenenfalls die flüchtigen Hilfsstoffe und restlichen Monomere durch Wasserdampfdestillation entfernt werden, die entstehende Suspension in einem Kühlschritt gekühlt wird und in einem nachfolgenden Schritt mechanisch das feuchte Polymer abgetrennt wird und/oder thermisch zu Polymerpulver getrocknet wird, das dadurch gekennzeichnet ist, dass der Kühlschritt eine indirekte Kühlung mittels eines Spiralwärmeaustauscher umfasst

Beim erfindungsgemäßen Verfahren wird ein Polymer-haltiger Latex zu Polymerpulver aufgearbeitet. Ein Latex ist allgemein eine Dispersion wasserunlöslicher Polymere in Wasser. Der Latex enthält je nach Herstellungsprozess ein kautschukhaltiges Pfropfpolymerisat und/oder ein kautschukhaltiges Vinylharzpolymerisat. Bevorzugt handelt es sich um einen Latex der ein Acrylnitril-Butadien-Styrol-Emulsionspolymerisat enthält. Durch Zusatz eines Koagulans und unter Durchmischung, Scherung und Wärmeeinwirkung wird der Latex koaguliert und eine Suspension erhalten. Geeignete Koaguliermittel sind insbesondere in Wasser lösliche Alkali- und Erdalkalisalze organischer und anorganischer Säuren, sowie Stoffe die durch Hydrolyse Fällmittel bilden. Bevorzugt sind Natriumchlorid, Magnesiumchlorid, Magnesiumsulfat, Calciumchlorid, Aluminiumsulfat, Salzsäure, Schwefelsäure, Phosphorsäure, Ameisensäure, Essigsäure, Propionsäure und deren Salze, besonders bevorzugt sind Essigsäure und Magnesiumsulfat (Bittersalz). Die Durchmischung und Scherung des Latex unter Bildung des Koagulats erfolgt in einem so genannten Fällkessel. Bevorzugt handelt es sich dabei um ein mehrstufiges Verfahren, das in einer mehrstufigen Fällkesselkaskade durchgeführt wird. Meist bevorzugt handelt es sich dabei um eine vierstufige Fällkesselkaskade, d.h. um eine Anordnung aus vier leitend verbundenen Fällkesseln. Die Wärmeeinwirkung auf das Koagulat erfolgt durch Beheizen des Kessels oder durch Einblasen von Wasserdampf. Die erforderliche Temperatur richtet sich nach dem Druck im System. Gegebenenfalls ist zur Entfernung der flüchtigen Hilfsstoffe und der restlichen Monomere eine Wasserdampfdestillation vorgesehen. Die aus dem Latex entstehende Suspension, die im Allgemeinen eine Temperatur von 100°C aufweist, wird in einem Kühlschritt gekühlt, um in einem nachfolgenden mechanischen Schritt in Wasser und feuchtes Polymer getrennt und/oder thermisch zu Polymerpulver getrocknet zu werden. Der Kühlschritt ist notwendig, um im nachfolgenden Trocknungsschritt (z. B. Zentrifuge) ein Verkleben, Verschmelzen bzw. Plastifizieren der entstandenen Polymerpartikel zu verhindern.

Erfindungsgemäß umfasst der Kühlschritt eine indirekte Kühlung mittels eines Spiralwärmeaustauschers. Der Wärmeaustauscher ist beispielsweise an einen geschlossenen Kühlkreislauf aus einem Kühlmedium angeschlossen. Der Wärmeübertrag auf das Medium des Kühlkreislaufs erfolgt somit indirekt über den Wärmeaustauscher. Dadurch kann das Verfahren in vielerlei Hinsicht effizienter durchgeführt werden. Der Eintrag von entmineralisiertem Wasser (VE-Wasser) mit entsprechend niedriger Temperatur zur Kühlung kann so reduziert werden. Die Kosten werden verringert, u.a. weil weniger kontaminiertes Kühlwasser in einer biologischen Kläranlage aufbereitet werden muss. Zusätzlich wird der nachgeschaltete Trocknungsschritt durch die geringere Kühlwassermenge entsprechend geringer belastet, da die Suspension in geringerem Umfang verdünnt wird. Die Herstellung des Pulvers wird günstiger.

In einer besonderen Ausgestaltung des erfindungsgemäßen Verfahrens, erfolgt die Kühlung durch Zusatz mit entmineralisiertem Wasser nur in einer Anlaufphase des Verfahrens, um ein Verkleben, Verschmelzen bzw. Plastifizieren der entstandenen Polymerpartikel beispielsweise in dem Wärmeaustauscher in der Anlaufphase zu vermeiden.

In einer vorteilhaften Ausführungsform des erfindungsgemäßen Verfahrens erfolgt im Kühlschritt die Kühlung ganz ohne Zusatz von Kühlwasser in die Suspension, indem beispielsweise die Kapazität des Wärmeaustauschers entsprechend ausgelegt ist. Dadurch entfällt der Zusatz von entmineralisiertem Wasser (VE-Wasser) in die Suspension. Die Kosten werden verringert, u.a. weil das Kühlwasser nicht kontaminiert wird und nicht in einer biologischen Kläranlage aufbereitet werden muss. Zusätzlich wird die Suspension durch den Kühlschritt nicht verdünnt. Die Herstellung des Pulvers wird günstiger.

Ein Spiralwärmeaustauscher ist ein vergleichsweise einfach und preiswert herstellbarer Wärmeaustauscher. Im Allgemeinen wird er gefertigt, indem ein längliches rechteckiges Blech längs auf etwa die halbe Länge zusammengefaltet wird. Dann wird es von der Falzstelle beginnend, zu einer Spirale aufgewickelt. Durch bestimmte Maßnahmen wird beim Wickeln garantiert, dass zwischen den Blechstreifen Platz verbleibt, und es entstehen zwei voneinander getrennte Räume, die spiralförmig ineinander gewickelt sind, die jedoch stirnseitig noch offen sind.

Die Stirnseiten des aufgewickelten Blechs werden allgemein durch Schweißen verschlossen, oder es werden zwei abgedichtete runde Spanndeckel beispielsweise durch Zuganker und Dichtungen angebracht. Zudem werden vier Anschlüsse angebracht, durch die die beiden Medien, einmal ein im Kreislauf umlaufendes Kühlmedium und die zu kühlende Suspension ein- und austreten (2 Anschlüsse an der Falzstelle und 2 Anschlüsse am Spiralenende). Diese Anschlüsse können auch in den Spanndeckeln sein. Spiralwärmeaustauscher werden allgemein als Gegenstromwärmeaustauscher betrieben.

Der Spiralwärmetauscher zeichnet sich nicht nur durch die preiswerte Herstellung sondern auch dadurch aus, dass er unempfindlich gegen Verstopfung ist, weil die Suspension den kompletten Querschnitt durchfließt und es im Gegensatz zu Rohrbündel- und Plattenwärmetauschern keine internen Verzweigungen gibt, in denen sich aufgrund geringerer Strömungsgeschwindigkeiten Verschmutzungen absetzen oder Ablagerungen ausbilden können. Produktionsunterbrechungen werden so vermieden und der Wärmeübergang wird durch Vermeidung der Ablagerungen nicht beeinträchtigt.

Bevorzugt wird im Kühlschritt die Temperatur der Suspension auf etwa 70°C, also beispielsweise von etwa 100°C um etwa 30°C, gesenkt. Es hat sich in mehreren Versuchen gezeigt, dass eine Suspensionstemperatur von 70°C ausreicht, zuverlässig ein Verkleben, Verschmelzen bzw. Plastifizieren der entstandenen Polymerpartikel im nachgeschalteten Trocknungsverfahren, insbesondere bei der Verwendung von einer oder mehrerer Zentrifugen zu vermeiden.

Zur besseren Steuerung des Kühlprozesses wird im Kühlschritt die Suspension in einen Kreisumlauf durch den Wärmeaustauscher geführt. Dadurch wird der Wärmeübergang effektiver und die Wärmeaustauscherfläche lässt sich reduzieren.

Bei einer weiteren vorteilhaften Ausführungsform wird beim Kreisumlauf der Suspension eine Zerkleinerung, beispielsweise in einer Mühle bzw. Pumpe, bevorzugt unter Einwirkung von Scherkräften, vorgenommen, bevor die Suspension den Wärmeaustauscher erreicht. Dadurch kann in besonders vorteilhafter Weise ein Verstopfen des Wärmeaustauschers verhindert werden.

Bevorzugt handelt es sich um eine Pumpe bei der das Polymer-Agglomerat (z. B. abfallende Produktanbackungen in der Fällkaskade) durch hohe Scherkräfte in einem Rotor-/Statorsystem zerkleinert. Eine derartige Pumpe wird von der Firma "Siefer" unter der Typenbezeichnung SM 290 hergestellt. Diese so genannte "Siefermühle" besitzt neben ihrer Fördereigenschaften auch Zerkleinerungseigenschaften.

Gemäß einer weiteren vorteilhaften Ausführungsform ist eine Anlaufphase vorgesehen, bei der die Suspension durch Zugabe von Kühlwasser beispielsweise entmineralisiertem Wasser, gekühlt wird, beispielsweise bis eine Temperatur von 70°C erreicht ist. Dabei wird die Suspension im Kreisumlauf dem Wärmeaustauscher in nur geringem Maße zugeführt. Anschließend umströmt die Suspension im Kreisumlauf den Wärmeaustauscher über eine voll geöffnete Bypass-Leitung. Durch nachfolgendes Androsseln des Bypass-Ventils in der Bypass-Leitung wird der Spiralwärmeaustauscher auf volle Kühlleistung gebracht und schrittweise die Direkt-Zugabe von Kühlwasser eingestellt. Danach werden die Mengenströme zum und am Spiralwärmeaustauscher vorbei (Bypass-Leitung) über eine Druckregelung beispielsweise automatisch geregelt.

Bei einer weiteren vorteilhaften Ausführungsform umfasst das Verfahren wenigstens eine automatisierte Temperaturregelung der Suspension und/oder eine Druckregelung. Dadurch kann das Verfahren besonders effizient durchgeführt werden. Die Druckregelung sorgt für die automatische Aufteilung der Suspensionsmengen die über den Spiralwärmeaustauscher bzw. über die Bypass-Leitung strömen sollen.

### Zu den Figuren:

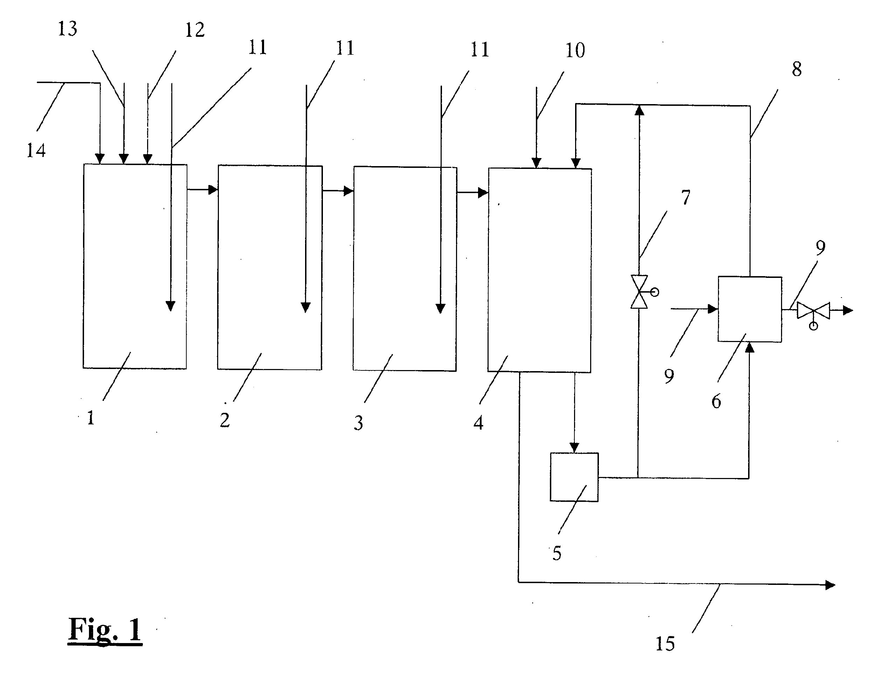

Figur 1 zeigt schematisch den erfindungsgemäßen Verfahrensablauf.

Fig. 1 zeigt die Rührbehälter 1, 2, 3 und 4 der 4stufigen Fällkesselkaskade die zur Fällung von ABS-Latex eingesetzt wird. Bei der Koagulation/Fällung von Latex (14) wird Essigsäure (13) und Bittersalz (13) in einer gemeinsamen Rohrleitung dem 1. Fällkessel (1) zugeführt, und gleichzeitig auf ca. 100°C erhitzt. Das Aufheizen geschieht durch das direkte Einblasen von Heizdampf (11) in den 1. bis 3. Fällkessel (1, 2, und 3). Mutterlauge (12) wird aus der nachgeschalteten Entwässerung (hier nicht dargestellt) dem Fällkessel (1) wieder zurückgeführt.

Die Überführung des Latex in eine Suspension ist im 3. Fällkessel weitgehend abgeschlossen. Der 4. Fällkessel (4) dient lediglich dazu die Suspension abzukühlen, um beim anschließenden Entwässern in Zentrifugen, die notwendig niedrige Verarbeitungstemperatur von ca. 70°C zu erreichen.

Hierzu wurde bislang kaltes VE-Wasser (10) dem 4. Fällkessel (4) beigemischt, sodass die gewünschte Temperatur von 70°C erreicht wurde. Erfindungsgemäß wird diese Möglichkeit nur noch zum Anfahren der Fällkaskade genutzt, um zu vermeiden, dass ABS-Partikel in Folge hoher Scherung in den Pumpen (5) plastifizieren. Beim Airfahren stellt man zunächst die gewünschte Temperatur von ca. 70°C durch Beimischen von kaltem VE-Wasser her. Anschließend wird die Umpumpung über die Pumpe (5) gestartet, der Bypass (7) vollständig geöffnet und der Spiralwärmeaustauscher (6) in Betrieb genommen. Nachdem das Kühlwasser (9) und die Suspension durch den Wärmeaustauscher fließt, wird langsam der Bypass (7) angedrosselt und gleichzeitig die VE-Wassermenge (10) soweit reduziert, bis kein VE-Wasser mehr in den 4. Fällkessel einströmt. Danach wird der Vordruck vor dem Spiralwärmeaustauscher (6) auf einen Sollwert von ca. 1,3 bar eingestellt und durch eine Festwertregelung konstant gehalten. Im Dauerbetrieb wird die Temperatur im 4. Fällkessel (4) durch die automatische Verstellung der Kühlwassermenge (9) am Spiralwärmeaustauscher (6) geregelt.

## Patentansprüche

1. Verfahren zur Aufarbeitung eines Polymer-haltigen Latex zu feuchtem Polymer bzw. Polymerpulver bei dem durch Zusatz eines Koagulans, insbesondere einer Säure und/oder eines Elektrolyten, unter Durchmischung und/oder Scherung der Latex unter Wärmeeinwirkung koaguliert wird, gegebenenfalls die flüchtigen Hilfsstoffe und restlichen Monomere durch Wasserdampfdestillation entfernt werden, die entstehende Suspension in einem Kühlschritt gekühlt wird und in einem nachfolgenden Schritt mechanisch das feuchte Polymer abgetrennt wird und/oder thermisch zu Polymerpulver getrocknet wird, **dadurch gekennzeichnet, dass** der Kühlschritt eine indirekte Kühlung mittels eines Spiralwärmeaustauschers umfasst.

2. Verfahren gemäß Anspruch 1, **dadurch gekennzeichnet, dass** im Kühlschritt die Kühlung, gegebenenfalls außerhalb einer vorgeschalteten Anlaufphase des Verfahrens, ohne Zusatz von Kühlwasser erfolgt.

3. Verfahren gemäß einem der vorhergehenden Ansprüche, **dadurch gekennzeichnet, dass** im Kühlschritt die Temperatur der Suspension auf 70°C gesenkt wird.

4. Verfahren gemäß einem der vorhergehenden Ansprüche, **dadurch gekennzeichnet, dass** im Kühlschritt die Suspension in einen Kreisumlauf durch den Wärmeaustauscher geführt wird.

5. Verfahren gemäß dem vorhergehenden Anspruch, **dadurch gekennzeichnet, dass** beim Kreisumlauf der Suspension eine Zerkleinerung, beispielsweise unter Einwirkung von Scherkräften in einer Pumpe, vorgenommen wird, bevor die Suspension den Wärmeaustauscher erreicht.

6. Verfahren gemäß einem der beiden vorhergehenden Ansprüche, **dadurch gekennzeichnet, dass** in einer vorgeschalteten Anlaufphase des Verfahrens die Suspension durch Zusatz von Kühlwasser gekühlt und die Suspension im Kreisumlauf den Wärmeaustauscher in nur geringem Maße zugeführt wird.

7. Verfahren gemäß einem der vorhergehenden Ansprüche, **dadurch gekennzeichnet, dass** das Verfahren wenigstens eine automatisierte Temperaturregelung der Suspension und/oder eine Druckregelung beinhaltet.

8. Verfahren gemäß einem der vorhergehenden Ansprüche, **dadurch gekennzeichnet, dass** der Latex ein Acrylnitril-Butadien-Styrol-Polymer enthält und das Koagulans Essigsäure und Bittersalz beinhaltet.

9. Verfahren gemäß einem der vorhergehenden Ansprüche, **dadurch gekennzeichnet, dass** der Latex in einer Emulsionspolymerisationsreaktion hergestellt wird.

## Claims

1. A method for reprocessing a polymer-containing latex into a moist polymer or polymer powder, in which method the latex is coagulated under the effect of heat by adding, thoroughly mixing, and/or shearing a coagulating agent, in particular an acid and/or an electrolyte, the volatile auxiliary agents and remaining monomers are optionally removed using steam distillation, the obtained suspension is cooled in a cooling step, and the moist polymer is mechanically separated and/or thermally dried to polymer powder in a subsequent step, **characterized in that** the cooling step comprises indirect cooling by means of a spiral heat exchanger.

2. The method according to claim 1, **characterized in that** cooling in the cooling step optionally takes place outside of an upstream startup phase of the method and without adding water.

3. The method according to any one of the preceding claims, **characterized in that** in the cooling step, the temperature of the suspension is lowered to 70 °C.

4. The method according to any one of preceding claims, **characterized in that** in the cooling step, the suspension is fed in a circulation loop through the heat exchanger.

5. The method according to the preceding claim, **characterized in that** during the circulation of the suspension, a comminution is carried out in a pump, for example under the influence of shear forces, before the suspension reaches the heat exchanger.

6. The method according to any one of the two preceding claims, **characterized in that** in an upstream startup phase of the method, the suspension is cooled by adding water and the suspension in the circulation loop is fed to the heat exchanger only to a minor extent.

7. The method according to any one of the preceding claims, **characterized in that** the method comprises at least one automated temperature control of the suspension and/or one pressure control.

8. The method according to any one of the preceding claims, **characterized in that** the latex contains an acrylonitrile butadiene styrene polymer and the coagulating agent includes acetic acid and magnesium sulfate.

9. The method according to any one of the preceding claims, **characterized in that** the latex is produced in an emulsion polymerization reaction.

## Revendications

1. Procédé de transformation d'un latex contenant un polymère en un polymère humide ou une poudre de polymère, dans lequel par addition d'un coagulant, en particulier d'un acide et/ou d'un électrolyte, par mélange et/ou cisaillement, le latex est coagulé sous l'effet de la chaleur, éventuellement, les auxiliaires volatils et les monomères résiduels sont éliminés par distillation à la vapeur d'eau, la suspension obtenue est refroidie dans une étape de refroidissement et dans une étape consécutive, le polymère humide est séparée mécaniquement et/ou est séché thermiquement en poudre de polymère, **caractérisé en ce que** l'étape de refroidissement comprend un refroidissement direct au moyen d'un échangeur de chaleur en spirale.

2. Procédé selon la revendication 1, **caractérisé en ce qu'**à l'étape de refroidissement, le refroidissement s'effectue éventuellement en dehors d'une phase initiale en amont du procédé sans ajouter d'eau de refroidissement.

3. Procédé selon l'une des revendications précédentes, **caractérisé en ce qu'**à l'étape de refroidissement, la température de la suspension est abaissée à 70° C.

4. Procédé selon l'une des revendications précédentes, **caractérisé en ce qu'**à l'étape de refroidissement, la suspension est conduite dans un circuit dans l'échangeur de chaleur.

5. Procédé selon la revendication précédente, **caractérisé en ce que**, dans le circuit de la suspension, une réduction est entreprise par exemple, sous l'effet de forces de cisaillement dans une pompe, avant que la suspension atteigne l'échangeur de chaleur.

6. Procédé selon l'une des deux revendications précédentes, **caractérisé en ce que** dans une phase initiale en amont du procédé, la suspension est refroidie par addition d'eau froide et la suspension est acheminée dans le circuit à l'échangeur de chaleur uniquement en faible quantité.

7. Procédé selon l'une des revendications précédentes, **caractérisé en ce que** le procédé comprend au moins une régulation automatique de la température de la suspension et/ou une régulation de la pression.

8. Procédé selon l'une des revendications précédentes, **caractérisé en ce que** le latex contient un polymère d'acrylonitrile-butadiène-styrène et le coagulant contient de l'acide acétique et du sel d'Epsom.

9. Procédé selon l'une des revendications précédentes, **caractérisé en ce que** le latex est produit dans une réaction de polymérisation en émulsion.
